# EUROPEAN PATENT SPECIFICATION

(11) **EP 4 335 426 B1**
(45) Date of publication and mention of the grant of the patent: **15.01.2025**
(21) Application number: 22908816.6
(22) Date of filing: 07.11.2022
(51) Int. Cl.: F16B 7/04, F16B 2/06, A61G 13/12, A61G 15/12, F16C 7/00, F16L 3/02, F16B 2/10

(54) **CONNECTING ROD ASSEMBLY, DOUBLE-CONNECTING-ROD FIXING DEVICE, AND SURGICAL HEAD FRAME**
STANGENVERBINDUNGSANORDNUNG, FIXIERVORRICHTUNG FÜR DOPPELSTANGENVERBINDUNG UND CHIRURGISCHER KOPFRAHMEN
ENSEMBLE TIGE DE LIAISON, DISPOSITIF DE FIXATION À DOUBLE TIGE DE LIAISON ET CADRE DE TÊTE CHIRURGICALE

(30) Priority: 13.04.2022 CN 202210388178
(43) Date of publication of application: 13.03.2024
(73) Proprietor: Beijinghonghu Gaoxiang Technology Development Co, Ltd., Beijing 100190 (CN)
(72) Inventor: WANG, Bing, Beijing 100000 (CN); MENG, Qing Guo, Chaoyang Liaoning 122000 (CN)
(74) Representative: Chung, Hoi Kan
(86) International application number: PCT/CN2022/130201
(87) International publication number: WO 2023/197581

(56) References cited:
- CN-A- 114 857 159
- CN-U- 209 540 207
- CN-U- 209 540 207
- CN-U- 213 047 041
- CN-U- 216 078 022
- US-A- 4 964 748
- US-A- 4 964 748
- US-A- 5 276 927
- US-A1- 2019 298 597

## Description

### Technical field

The present invention relates to the technical field of medical devices and especially to a link lever assembly, dual-link-lever fixing assembly and surgical head frame.

### Background technology

U-shaped head frames and intermediate connection devices of operation table installations currently available comprise usually locking devices, toothed link levers and rotational connectors, after assembly, the intermediate connection devices can be rotated for 360°, and can realize connection between the U-shaped head frames and the operation table installations. During use, it is necessary to lock one place with a handle, connect two places with another handle and screws, that is, to fix three places, and the problem with the connection structure is that it takes a long time for connecting with the handles and the screws, manufacturing cost of elements of the locking devices and the rotational connectors is high, and it is not easy to maintain the connection structure.

Document US 4 964 748 A discloses a positioning device.

### Summary of the invention

A purpose of the present invention is to provide a link-lever assembly, dual-link-lever fixing assembly and surgical head frame, to address the problem that it takes a long time to install and connect the U-shaped head frame and operational tables, manufacturing cost of the connection pieces is high and it is difficult to maintain the parts.

To address the foregoing problem, the technical solutions provided in the present invention are that:
The present invention provides a link-lever assembly, comprising a dual-joint link-lever and a guiding rod, wherein the guiding rod comprises a ring portion and a rod portion;
The dual-joint link-lever comprises a first connection ring, a first pressing panel, a second connection ring, a second pressing panel and a connection plate; the first connection ring and the second connection ring are provided at both ends along a longitudinal direction of the connection plate, and the first connection ring and the second connection ring are axially parallel; the first pressing panel is provided at a side of the connection plate in a thickness direction and an end portion of the first pressing panel is connected with the first connection ring, a first locking joint communicating with a first annular hole of the first connection ring is formed in between the first pressing panel and the connection plate; the second pressing panel is provided at another side of the connection plate in the thickness direction, and an end portion of the second pressing panel away from the first pressing panel is connected with the second connection ring, and a second locking joint communicating with a second annular hole of the second connection ring is provided in between the second pressing panel and the connection plate; the first pressing panel and the second pressing panel are configured to reduce the diameters of the first annular hole and the second annular hole by pressing forces acting in opposite directions;
At least one connection hole is provided on the ring portion, a third locking joint extending along an axial direction of the rod portion is provided on the rod portion, and the third locking joint is communicated with the at least one connection hole; the rod portion is inserted into the second connection ring; the rod portion is configured to reduce the size of the third locking joint when being pressed and thereby reduces a diameter of the at least one connection hole of the ring portion. Further, a width of the first locking joint increases gradually along a direction away from the first connection ring; and a width of the second locking joint gradually increases along a direction away from the second connection ring.

Further, a first annular joint is provided circumferentially around the first connection ring, the first annular joint separates the first connection ring into two ring bodies along a width direction; and a second annular joint is provided circumferentially around the second connection ring, and the second annular joint divides the second connection ring into two ring bodies along a width direction.

Further, the link-lever assembly comprises further a handle and connection screws; the connection screws pass sequentially the second pressing panel, the connection plate and the first pressing panel, and the axis of the connection screws are perpendicular to the axis of the first connection ring in a horizontal plane; one end of the handle is hingedly connected with ends of the connection screws, a cam structure is provided at an end wherein the handle is hingedly connected with the connection screws and the cam structure is abutted to the second pressing panel. Further, the link-lever assembly comprises a limiting pin, the limiting pin is inserted in the handle; the limiting pin is slidably connected with the handle and is configured to be able to be inserted into both the handle and the connection screws to prevent the handle from rotating.

The present invention provides a dual-link-level fixing assembly, comprises the forgoing link-lever assemblies, comprises further a steering column; wherein the steering column is provided in between two link-lever assemblies, and both ends of the steering column are respectively connected with the two link-lever assemblies; connection shafts are provided at both ends of the steering column, the axes of the two connection shafts are perpendicular to each other; and the two connection shafts are inserted into connection holes in the two link-lever assemblies.

Further, at least one annular groove is provided on the connection shafts, threaded holes are opened at side surfaces of the connection holes; and fixing screws are inserted into the threaded holes and inserted into the at least one annular groove. Further, the dual-link-lever fixing assembly comprises further a gear shaft; a side of the gear shaft is inserted into the first connection ring of one of the link-lever assemblies; and a surface of another side of the gear shaft is configured to be tooth-shaped and to be connected with a U-shaped head frame.

The present invention further provides a surgical head frame, comprising the foregoing dual-link-lever fixing assembly; wherein one end of the dual-link-lever fixing assembly is connected with the U-shaped head frame and another end thereof is connected with an operational table.

In view of the foregoing technical solutions, technical effects that the present invention can realize are that:
The present invention provides a link-lever assembly; wherein the link-lever assembly comprises a two-joint link-lever and a guiding rod, wherein the guiding rod comprises a ring portion and a rod portion;
Wherein, the two-joint link-lever comprises a first connection ring, a first pressing panel, a second connection ring, a second pressing panel and a connection plate; the first connection ring and the second connection ring are provided at both ends of the connection plate along a longitudinal direction, and axial lines of the first connection ring and the second connection ring are parallel; the first pressing panel is provided at a side of the connection plate along a thickness direction and end portions of the first pressing panel is connected with the first connection ring, and a first locking joint communicating with a first annular hole of the first connection ring is formed in between the first pressing panel and the connection plate; the second pressing panel is provided at another side of the connection plate along the thickness direction, and an end portion of the second pressing panel away from the first pressing panel is connected with the second connection ring, and a second locking joint communicating with the second connection ring is formed in between the second pressing panel and the connection plate; and the first pressing panel and the second pressing panel are configured to drive diameters of the first annular hole and the second annular hole to be smaller upon extrusion by extruding forces in opposite directions.

With the dual-joint link-lever provided in the present invention, by pressing at the same time the first pressing panel and the second pressing panel to reduce the diameters of the first annular hole and the second annular hole, with only one operation the shafts in the first annular hole and the second annular hole can be locked. In conventional technologies, by one operation only structures of a shaft can be locked and to connect two shafts, two operations are required to lock the two shafts. In comparison, with the dual-joint link-lever the locking operations are simplified, in the meanwhile the number of elements is reduced, the connection structure is simplified, installation time is reduced efficiently, manufacturing cost of the connection pieces is reduced and maintainability is improved.

### Brief description of drawings

To explain the technical solutions in the embodiments or the prior art more clearly, hereinafter a brief introduction is given to the drawings to be used in description of the embodiments or the prior art, obviously, the drawings given show only some embodiments of the present invention, and for of ordinary skill in the art, without paying creative effort, it is possible to obtain other drawings with the provided drawings.
Figure 1 is a front view of a link-lever assembly provided in an embodiment of the present invention;
Figure 2 is an A-A sectional diagram showing the link-lever assembly provided in an embodiment of the present invention;
Figure 3 is a structural diagram showing a dual-joint link-lever in the link-lever assembly provided in an embodiment of the present invention;
Figure 4 is a structural diagram showing the dual-joint link-lever in the link-lever assembly provided in an embodiment of the present invention;
Figure 5 is a structural diagram showing a guiding rod;
Figure 6 is a structural diagram showing a handle;
Figure 7 is a structural diagram showing a steering column;
Figure 8 is a structural diagram showing a gear shaft;
Figure 9 is a structural diagram showing a surgical head frame according to an embodiment of the present invention; and
Figure 10 is a structural diagram showing the surgical head frame according to an embodiment of the present invention.

In the drawings: 100-link-lever assembly; 200-steering column; 300-gear shaft; 110-dual-joint link-lever; 120-guiding rod; 130-handle; 140-connection screw; 150-limiting pin; 210-connection pin; 220-connection handle; 111-first connection ring; 112-first pressing panel; 113-second connection ring; 114-second pressing panel; 11S-connection plate; 116-locking hole; 121-ring portion; 122-rod portion; a-first annular hole; b-second annular hole; c-first locking joint; d-second locking joint; e-first annular joint; f-second annular joint; g-connection hole; h-third locking joint; k-limiting groove; and m-annular groove.

### Embodiments

To make the purpose, technical solutions and advantages of the present invention more clear, hereinafter a clear and complete description will be given to the technical solutions in the embodiments of the present invention in conjunction with the drawing accompanying the present invention, apparently, the embodiments given here are only some of the embodiments of the present invention rather than all. Usually elements described and shown in the following embodiments and the drawings can be laid out and designed in many different configurations.

Hereafter in combination with the accompanying drawings, some embodiments of the present invention will be described in detail. When no conflict will occur, embodiments or features in the following embodiments can be combined with each other.

### Embodiment 1

For U-shaped head frames and operational tables, it takes a long time to install and connect the same, manufacturing cost of connection pieces is high and it is not easy to maintain properly the U-shaped head frames and the operational tables.

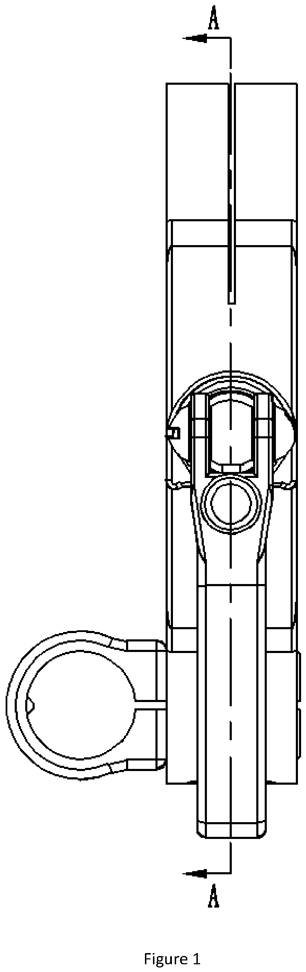

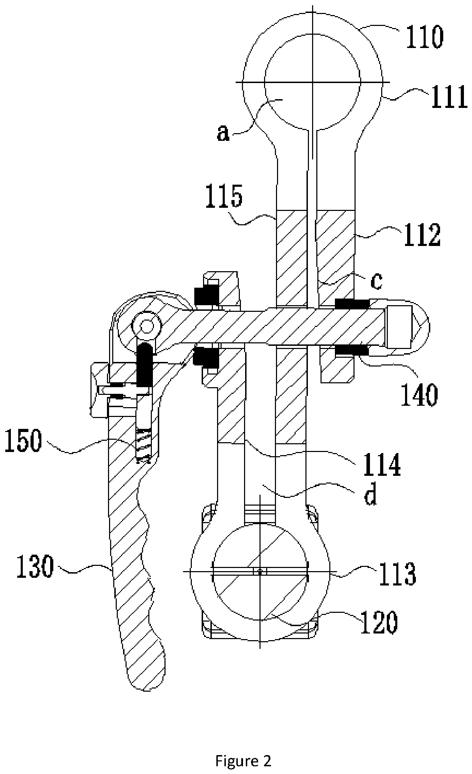

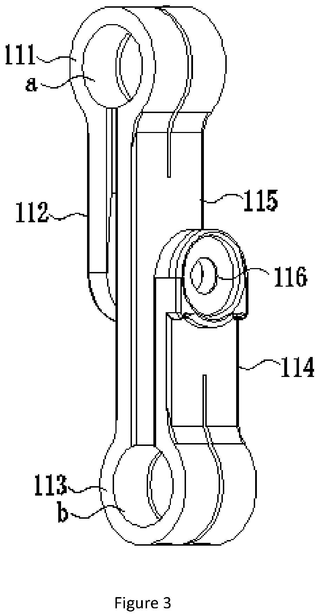

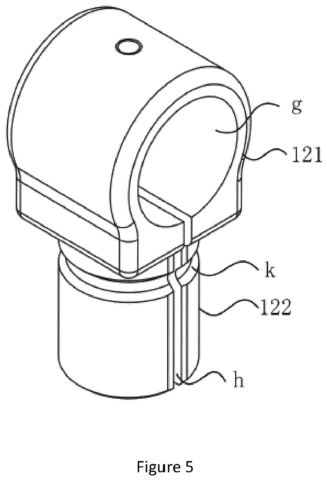

An embodiment of the present invention provides a link-lever assembly 100, comprises a dual-joint link-lever 110 and comprises further a guiding rod 120. As shown in figures 2 and 5, the guiding rod 120 comprises a ring portion 121 and a rod portion 122;
In the meanwhile, please refer to figures 1-3, the dual-joint link-lever 110, comprises a first connection ring 111, a first pressing panel 112, a second connection ring 113, a second pressing panel 114 and a connection plate 115; the first connection ring 111 and the second connection ring 113 are provided at both ends of the connection plate 115 along a longitudinal direction, and axial lines of both the first connection ring 111 and the second connection ring 113 are parallel; the first pressing panel 112 is provided at a side of the connection plate 115 along a thickness direction, and is connected with the first connection ring 111, and a first locking joint c communicating with a first annular hole a of the first connection ring 111 is formed in between the first pressing panel 112 and the connection plate 115; the second pressing panel 114 is provided at another side of the connection plate 115 along the thickness direction and an end portion of the second pressing panel 114 away from the first pressing panel 112 is connected with the second connection ring 113, and a second locking joint d communicating with a second annular hole b of the second connection ring 113 is formed in between the second pressing panel 114 and the connection plate 115; and the first pressing panel 112 and the second pressing panel 114 are configured to drive diameters of the first annular hole a and the second annular hole b to be smaller upon extrusion in opposite directions;
At least one connection hole g is provided on the ring portion 121, a third locking joint h extending along an axial direction of the rod portion 122 is provided on the rod portion 122, and the third locking joint h is communicated with the at least one connection hole g; the rod portion 122 is inserted into the second connection ring 113; and the rod portion 122 is configured to drive diameters of the ring portion 121 to be smaller by driving the third locking joint h to be smaller upon extrusion.

By analyzing the technical solution, it can be known that: for the dual-joint link-lever 110, by pressing simultaneously the first pressing panel 112 and the second pressing panel 114 diameters of the first annular hole a and the second annular hole b are reduced, in this way, with only one operation, the shafts in the first annular hole a and the second annular hole b can be locked. In conventional technologies, with one operation only one shaft can be fixed, and to connect two shafts two operations are required to respectively lock the two shafts. In comparison, the dual-joint link-lever 110 provided in the present invention has simplified locking operations, in the meanwhile, reduced the number of elements, simplified connection structures, shortened installation time, reduce manufacturing cost of the connection pieces and improved maintainability.

Hereinafter with reference to figures 1-4, a detailed description is given to structures and configurations of the dual-joint link-lever 110.

In an optional technical solution, a width of the first locking joint c increases gradually along a direction away from the first connection ring 111, a width of the second locking joint d increases gradually along a direction away from the second connection ring 113, therefore, when the first pressing panel 112 and the second pressing panel 114 are pressed upon, diameters of the first annular hole a and the second annular hole b are reduced, locking force on the shafts in the first annular hole a and the second annular hole b are increased and the connection is more reliable.

Further, a first annular joint e is provided circumferentially around the first connection ring 111, and the first annular joint e divides the first connection ring 111 to be two ring bodies along a width direction; a second annular joint f is provided circumferentially around the second connection ring 113, the second annular joint f divides the second connection ring 113 to be two ring bodies along a width direction, so that inner surfaces of the first connection ring 111 and the second connection ring 113 contact fully the shafts inserted therein and friction is improved to prevent the shafts from rotation.

Further, at least one annular locating groove k is provided on the rod portion 122 and is configured to locate the dual-joint link-lever 110.

Specifically, the guiding rod 120 is made from aluminum alloy to reduce weight and make it easy to claim and use it.

In the present embodiment, a width of the second locking joint d is bigger than a width of the first locking joint c, in this way, reduction of the diameter of the second annular hole b will be smaller than reduction of the diameter of the first annular hole a, bigger locking forces can be provided to the rod portion 122 inserted in the second connection ring 113 and the connection is promised to be reliable.

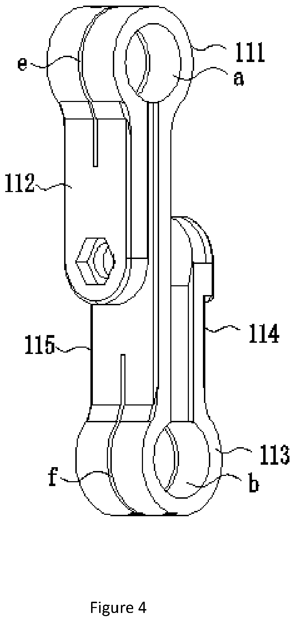

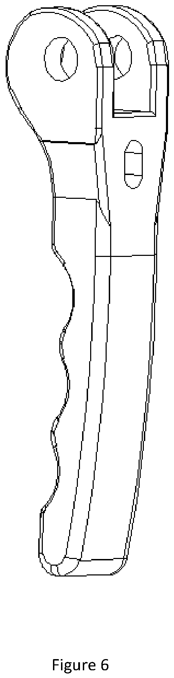

In an optional technical solution of the present embodiment, the link-lever assembly 100 comprises further a handle 130 and at least one connection screw 140; the at least one connection screw 140 passes sequentially the second pressing panel 114, the connection plate 115 and the first pressing panel 112, an axial line of the at least one connection screw 140 is vertical to a vertical line of the first connection ring 111 in a horizontal plane; one end of the handle 130 is hinged with an end of the at least one connection screw 140, a cam structure is provided at an end of the handle 130 hinged with the at least one connection screw 140, and the cam structure is abutted against the second pressing panel 114 as shown in figures 4 and 6.

Specifically, at least one nut is installed at an end of the at least one connection screw 140, and another end of the at least one connection screw 140 is connected with the handle 130. The second pressing panel 114, the connection plate 114 and the first pressing panel 112 are located in between the at least one nut and the handle 130.

When rotating the handle 130, a surface of the cam structure with a smaller diameter of the handle 130 is abutted against the second pressing panel 114, the first locking joint c and the second locking joint d are opened, in the meanwhile the third locking joint h is opened, at this time, the shafts inserted in the first connection ring 111, the second connection ring 11 and the ring portion 121 can rotate for 360° freely.

When rotating the handle 130 to abut a surface of the cam structure with a bigger diameter of the handle 130 against the second pressing panel 114, the handle 130 and the at least one nut are pressed against the first pressing panel 112 and the second pressing panel 114, so that widths of the first locking joint c and the second locking joint d are reduced, at this time, the rod portion 122 interpolated in the second connection ring 113 is pressed upon, the third locking joint h becomes smaller, and the shafts in the first connection ring 111, the second connection ring 113 and the ring portion 121 are locked and fixed. In this way, by rotating once the handle 130 through the dual-joint link-lever 110 three shafts can be locked at the same time, the three shafts comprise a shaft interpolated in the first connection ring 111, the rod portion 122 interpolated into the second connection ring 113 and the shaft interpolated into the ring portion 121, the number of elements is reduced, complexity and operation difficulty of the connection structures is reduced and operation time is saved.

Specifically, a locking hole 116 is provided in the dual-joint link-lever 110, as shown in figure 1, the locking hole 116 passes the second pressing panel 114, the connection plate 115 and the first pressing panel 112, and the at least one 140 is interpolated in the locking hole 116. A hexagonal hole is provided in the first locking panel, the hexagonal hole and the locking hole 116 are axially connected at a tail end portion of the locking hole 116, the at least one nut is provided in the hexagonal hole and can be engaged with the at least one connection screw 140.

To prevent the handle 130 to fall off from the second pressing panel 114 after attachment, a mattress and a mattress protector are provided on the second pressing panel 114, and the mattress is interpolated in the mattress protector and is integral with the mattress protector. Both the mattress and the mattress protector are sleeved over the at least one connection screw 140, the mattress is abutted against the cam structure of the handle 130, and the mattress protector is abutted against the second pressing panel 114. By providing the mattress and the mattress protector friction between the handle 130 and the second pressing panel 114 is increased to prevent the handle 130 from rotating, loosening of the first locking joint c, the second locking joint d and the third locking joint h, and rotation or loosening of the shafts in the first connection ring 111, the second connection ring 113 and the ring portion 121.

Further, the link-lever assembly 100 comprises further a limiting pin 150, as shown in figure 4, the limiting pin 150 is inserted into the handle 130; the limiting pin 150 is slidably connected with the handle 130, and configured to be able to be interpolated into both the handle 130 and the at least one connection screw 140 to prevent the handle 130 from rotating, loosening of the first locking joint c, the second locking joint d and the third locking joint h, and rotation and even loosening of the shafts installed in the first connection ring 111, the second connection ring 113 and the ring portion 121.

### Embodiment 2

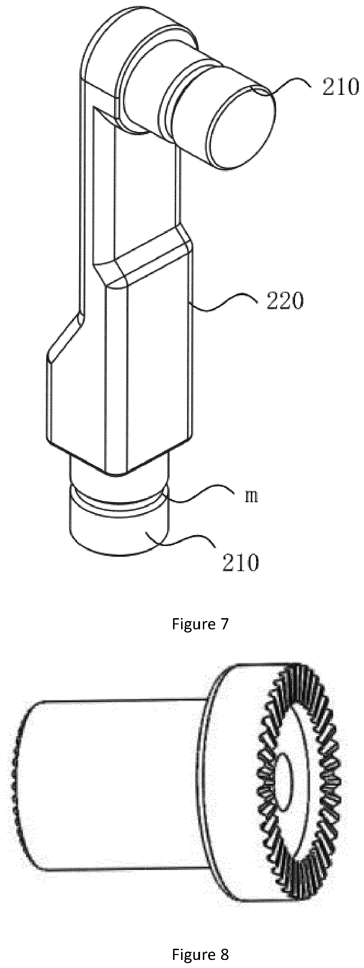

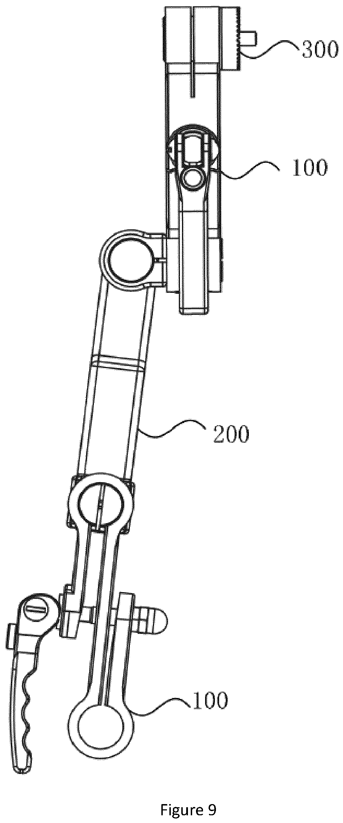

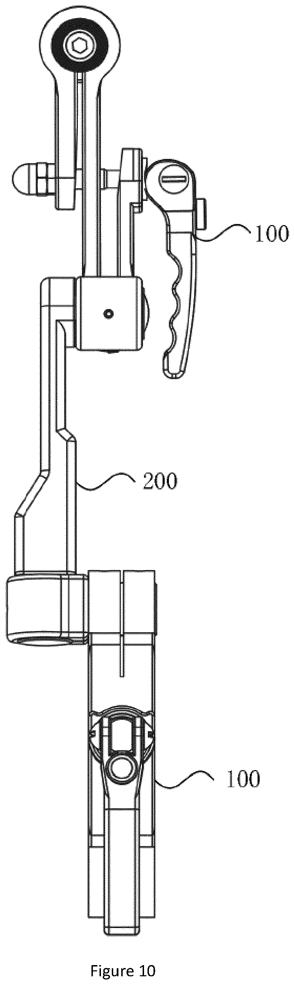

The embodiment 2 of the present invention provides a dual-joint link-lever fixing assembly, comprises the foregoing link-lever assemblies 100, and further comprises a steering column 200; as shown in figures 7, 9 and 10, the steering column 200 is located in between two link-lever assemblies 100, and both ends of the steering column 200 are respectively connected with the two link-lever assemblies 100; connection shafts 210 are provided in both ends of the steering column 200, axial lines of the two connection shafts 210 are vertical to each other; and the two connection shafts 210 are respectively inserted into connection holes g of the two link-lever assemblies 100.

Specifically, the steering column 200 further comprises a connection handle 220, and the two connection shafts 210 are respectively provided at both ends of the connection handle 220.

Further, the steering column 200 is made from aluminum alloy, to reduce weight and make it convenient to claim and operate it.

Further, at least one annular groove m is provided on the connection shafts 210, and threaded holes are opened on a side surface of the connection holes g; and fixing screws are installed into the threaded holes and inserted into the at least one annular groove m to realize location and prevent release of the connection shafts 210 from the connection holes g.

In the present embodiment, the dual-joint link-lever assembly comprises further a gear shaft 300; as shown in figures 8-10, a side of the gear shaft 300 is inserted into the first connection ring 111 of one of the link-lever assemblies 100; a surface of another side of the gear shaft 300 is configured to be tooth-shaped, and configured to be connected with the U-shaped head frame; the first connection ring 111 of another of the link-lever assemblies 100 is configured to be connected with at least one supporting beam of the operational table.

When rotating the handles 130 and surfaces of the cam structures of the handles 130 with a smaller diameter is abutted against the second pressing panels 114, the first locking joints c, the second locking joints d and the third locking joints h are opened at the same time, the two link-lever assemblies 100 can respectively rotate against axial lines of the two connection shafts 210, the dual-joint link-lever 110 can rotate against axial lines of the rod portions 122, and the gear shaft 300 can pivot against axial lines of the first connection rings 111, all of the foregoing three structures can rotate for 360° freely, so that it is easy to adjust angles and positions of the U-shaped head frame of the gear shaft 300, which makes it convenient to use.

In the present embodiment, by connecting the steering column 200 and the two link-lever assemblies 100 random adjustment and locking of the two link-lever assemblies relative to each other can be realized. During use, by rotating the handles 130 on the two link-lever assemblies 100, fixing of all shaft-hole connections is done. For connection devices comprising the locking device, the toothed link-levers and rotational connectors, three operations of the handle are required to fix the assembly; however, with the dual-link-lever fixing assembly, by only turning the two handles 130, that is, by operating the handles 130 for two times, fixing is done, while operation time is saved, connection reliability of the assembly is improved and complexity reduced, less elements are used, which makes it convenient to maintain and use the assembly.

### Embodiment 3

The surgical head frame provided in the present embodiment comprises the foregoing dual-link-lever fixing assembly; one end of the dual-link-lever fixing assembly is connected with the U-shaped head frame and another end thereof is connected to the at least one supporting beam of the operational table through the first connection rings 111.

By connecting the U-shaped head frame with the operational table via the dual-link-lever fixing assembly, quick installation and dismantling of the U-shaped head frame is realized and it is convenient to adjust the angle and position of the U-shaped head frame.

Finally it shall be noted that: the foregoing embodiments are only used to explain the technical solutions of the present invention rather than limit the same; although a detailed description has been given to the present invention with reference to the foregoing embodiments, those of ordinary skill shall understand that: it is still possible to modify the technical solution recited in the embodiments of the present invention; and all the modifications shall not make the essence of the corresponding technical solution deviate from the scope of the appended claims.

## Claims

1. A link-lever assembly, comprising a dual-joint link-lever (110) and a guiding rod (120), wherein the guiding rod (120) comprises a ring portion (121) and a rod portion (122);
the dual-joint link-lever (110) comprises a first connection ring (111), a first pressing panel (112), a second connection ring (113), a second pressing panel (114) and a connection plate (115);
the first connection ring (111) and the second connection ring (113) are provided at both ends along a longitudinal direction of the connection plate (115), and the first connection ring (111) and the second connection ring (113) are axially parallel;
the first pressing panel (112) is provided at a side of the connection plate (115) in a thickness direction and an end portion of the first pressing panel (112) is connected with the first connection ring (111), a first locking joint (c) communicating with a first annular hole (a) of the first connection ring (111) is formed in between the first pressing panel (112) and the connection plate (115); the second pressing panel (114) is provided at another side of the connection plate (115) in the thickness direction, and an end portion of the second pressing panel (114) away from the first pressing panel (112) is connected with the second connection ring (113), and a second locking joint (d) communicating with a second annular hole (b) of the second connection ring (113) is provided in between the second pressing panel (112) and the connection plate (115);
the first pressing panel (112) and the second pressing panel (114) are configured to reduce the diameters of the first annular hole (a) and the second annular hole (b) by pressing forces acting in opposite directions;
at least one connection hole (g) is provided on the ring portion (121), a third locking joint (h) extending along an axial direction of the rod portion (122) is provided on the rod portion (122), and the third locking joint (h) is communicated with the at least one connection hole (g); the rod portion (122) is inserted into the second connection ring (113); the rod portion (122) is configured to reduce the size of the third locking joint (h) when being pressed and thereby reduces the diameter of the at least one connection hole (g) of the ring portion (121).

2. The link-lever assembly according to claim 1, wherein
a width of the first locking joint (c) increases gradually along a direction away from the first connection ring (111);
and a width of the second locking joint (d) gradually increases along a direction away from the second connection ring (113).

3. The link-lever assembly according to claim 2, wherein
a first annular joint (e) is provided circumferentially around the first connection ring (111), the first annular joint (e) separates the first connection ring (111) into two ring bodies along a width direction;
and a second annular joint (f) is provided circumferentially around the second connection ring (113), and the second annular joint (f) divides the second connection ring (113) into two ring bodies along a width direction.

4. The link-lever assembly according to claim 3, wherein
the link-lever assembly further comprises a handle (130) and connection screws (140);
the connection screws (140) pass sequentially the second pressing panel (114), the connection plate (115) and the first pressing panel (112), and the axis of the connection screws (140) are perpendicular to an axis of the first connection ring (111) in a horizontal plane;
one end of the handle (130) is hingedly connected with ends of the connection screws (140), a cam structure is provided at an end wherein the handle (130) is hingedly connected with the connection screws (140) and the cam structure is abutted to the second pressing panel (112).

5. The link-lever assembly according to claim 4, wherein
the link-lever assembly comprises a limiting pin (150), the limiting pin (150) is inserted in the handle (130); and wherein
the limiting pin (150) is slidably connected with the handle (130) and is configured to be able to be inserted into both the handle (130) and the connection screws (140) to prevent the handle (130) from rotating.

6. A dual-link-level fixing assembly, comprises the link-lever assemblies (100) as defined in any of claims 1-5, further comprises a steering column (200); wherein the steering column (200) is provided in between two link-lever assemblies (100), and both ends of the steering column (200) are respectively connected with the two link-lever assemblies (100);
connection shafts (210) are provided at both ends of the steering column (200), and wherein the axes of the two connection shafts (210) are perpendicular to each other;
and the two connection shafts (210) are inserted into connection holes (g) in the two link-lever assemblies (100).

7. The dual-link-level fixing assembly according to claim 6, wherein
at least one annular groove (m) is provided on the connection shafts (210), threaded holes are opened at side surfaces of the connection holes (g);
and fixing screws are inserted into the threaded holes and inserted into the at least one annular groove (m).

8. The dual-link-level fixing assembly according to claim 7, wherein the dual-link-lever fixing assembly comprises further a gear shaft (300);
a side of the gear shaft (300) is inserted into the first connection ring (111) of one of the link-lever assemblies (100);
and a surface of another side of the gear shaft (300) is configured to be tooth-shaped and to be connected with a U-shaped head frame.

9. A surgical head frame, comprising the dual-link-lever fixing assembly as defined in any of claims 6-8; wherein
one end of the dual-link-lever fixing assembly is connected with the U-shaped head frame and another end thereof is connected with an operational table.

## Patentansprüche

1. Verbindungshebel-Anordnung, die einen Doppelgelenk-Verbindungshebel (110) und eine Führungsstange (120) umfasst, wobei die Führungsstange (120) einen Ringabschnitt (121) und einen Stangenabschnitt (122) umfasst;
wobei der Doppelgelenk-Verbindungshebel (110) einen ersten Anschlussring (111), eine erste Pressplatte (112), einen zweiten Anschlussring (113), eine zweite Pressplatte (114) und eine Anschlussplatte (115) umfasst;
wobei der erste Anschlussring (111) und der zweite Anschlussring (113) an zwei Enden entlang einer Längsrichtung der Anschlussplatte (115) vorgesehen sind und der erste Anschlussring (111) und der zweite Anschlussring (113) axial zueinander parallel sind;
wobei die erste Pressplatte (112) an einer Seite der Anschlussplatte (115) in einer Dickenrichtung vorgesehen ist, und ein Endabschnitt der ersten Pressplatte (112) an den ersten Anschlussring (111) angeschlossen ist, ein mit einem ersten Ringloch (a) des ersten Anschlussrings (111) kommunizierendes erstes Verriegelungsgelenk (c) zwischen der ersten Pressplatte (112) und der Anschlussplatte (115) gebildet wird; die zweite Pressplatte (114) an einer anderen Seite der Anschlussplatte (115) in Dickenrichtung vorgesehen ist, und ein Endabschnitt der von der ersten Pressplatte (112) abgewandten zweiten Pressplatte (114) an den zweiten Anschlussring (113) angeschlossen ist, ein mit einem zweiten Ringloch (b) des zweiten Anschlussrings (113) kommunizierendes zweites Verriegelungsgelenk (d) zwischen der zweiten Pressplatte (112) und der Anschlussplatte (115) vorgesehen ist;
wobei die erste Pressplatte (112) und die zweite Pressplatte (114) so konfiguriert sind, dass die Durchmesser des ersten Ringlochs (a) und des zweiten Ringlochs (b) durch in entgegengesetzte Richtungen wirkende Presskräfte reduziert werden;
wobei mindestens ein Anschlussloch (g) an dem Ringabschnitt (121) vorgesehen ist, ein sich entlang einer Axialrichtung des Stangenabschnitts (122) erstreckendes drittes Verriegelungsgelenk (h) an dem Stangenabschnitt (122) vorgesehen ist, und das dritte Verriegelungsgelenk (h) mit dem mindestens einen Anschlussloch (g) in Kommunikation steht; wobei der Stangenabschnitt (122) in den zweiten Anschlussring (113) eingeführt wird; der Stangenabschnitt (122) so konfiguriert ist, dass beim Pressen die Größe des dritten Verriegelungsgelenks (h) reduziert wird, und dadurch der Durchmesser des mindestens einen Anschlusslochs (g) des Ringabschnitts (121) reduziert wird.

2. Verbindungshebel-Anordnung nach Anspruch 1, wobei
eine Breite des ersten Verriegelungsgelenks (c) entlang von dem ersten Anschlussring (111) abgewandter Richtung schrittweise zunimmt;
und eine Breite des zweiten Verriegelungsgelenks (d) entlang von dem zweiten Anschlussring (113) abgewandter Richtung schrittweise zunimmt.

3. Verbindungshebel-Anordnung nach Anspruch 2, wobei
ein erstes Ringgelenk (e) um den ersten Anschlussring (111) in Umfangsrichtung vorgesehen ist, das erste Ringgelenk (e) den ersten Anschlussring (111) in zwei Ringkörper entlang einer Breitenrichtung trennt;
und ein zweites Ringgelenk (f) um den zweiten Anschlussring (113) in Umfangsrichtung vorgesehen ist, und das zweite Ringgelenk (f) den zweiten Anschlussring (113) in zwei Ringkörper entlang einer Breitenrichtung unterteilt;

4. Verbindungshebel-Anordnung nach Anspruch 3, wobei
die Verbindungshebel-Anordnung ferner einen Griff (130) und Anschlussschrauben (140) umfasst;
wobei die Anschlussschrauben (140) hintereinander die zweite Pressplatte (114), die Anschlussplatte (115) und die erste Pressplatte (112) durchlaufen, und die Achse der Anschlussschrauben (140) senkrecht zu einer Achse des ersten Anschlussrings (111) in einer Horizontalebene sind;
wobei ein Ende des Griffs (130) scharnierartig an den Enden der Anschlussschrauben (140) angeschlossen ist, eine Nockenstruktur an einem Ende vorgesehen ist, worin der Griff (130) scharnierartig an den Anschlussschrauben (140) angeschlossen ist und die Nockenstruktur an der zweiten Pressplatte (112) anliegt.

5. Verbindungshebel-Anordnung nach Anspruch 4, wobei
die Verbindungshebel-Anordnung einen Begrenzungsstift (150) umfasst, wobei der Begrenzungsstift (150) in den Griff (130) eingeführt wird; und wobei
der Begrenzungsstift (150) verschiebbar an dem Griff (130) angeschlossen und so konfiguriert ist, dass dieser sich sowohl in den Griff (130) als auch in die Anschlussschrauben (140) einführen kann, um ein Drehen des Griffs (130) zu verhindern.

6. Doppelt-Verbindungshebel-Befestigungsanordnung, umfassend die Verbindungshebel-Anordnungen (100), wie in einem der Ansprüche von 1 bis 5 definiert, ferner umfassend eine Lenksäule (200); wobei die Lenksäule (200) zwischen zwei Verbindungshebel-Anordnungen (100) vorgesehen ist und die zwei Enden der Lenksäule (200) jeweils an die zwei Verbindungshebel-Anordnungen (100) angeschlossen sind;
wobei Anschlusswellen (210) an zwei Enden der Lenksäule (200) vorgesehen sind, und wobei die Achsen der zwei Anschlusswellen (210) senkrecht zueinander sind; die zwei Anschlusswellen (210) in die Anschlusslöcher (g) in den zwei Verbindungshebel-Anordnungen (100) eingeführt werden.

7. Doppelt-Verbindungshebel-Befestigungsanordnung nach Anspruch 6, wobei
mindestens eine Ringnut (m) an den Anschlusswellen (210) vorgesehen ist, wobei die Gewindelöcher an den Seitenflächen der Anschlusslöcher (g) geöffnet ist;
und Befestigungsschrauben in die Gewindelöcher eingeführt und in die mindestens eine Ringnut (m) eingeführt werden.

8. Doppelt-Verbindungshebel-Befestigungsanordnung nach Anspruch 7, wobei die Doppelt-Verbindungshebel-Befestigungsanordnung ferner eine Getriebewelle (300) umfasst;
wobei eine Seite der Getriebewelle (300) in den ersten Anschlussring (111) einer der Verbindungshebel-Anordnungen (100) eingeführt wird;
und eine Oberfläche einer anderen Seite der Getriebewelle (300) so konfiguriert ist, dass diese zahnförmig ist und an einen U-förmigen Kopfrahmen anschließt.

9. Chirurgischer Kopfrahmen, umfassend die Doppelt-Verbindungshebel-Befestigungsanordnung, wie in einem der Ansprüche 6-8 definiert, wobei
ein Ende der Doppelt-Verbindungshebel-Befestigungsanordnung an dem U-förmigen Kopfrahmen und das andere Ende davon an einer Operationsliege angeschlossen ist.

## Revendications

1. Ensemble de bielle, comprenant une bielle à double articulation (110) et une tige de guidage (120), dans lequel la tige de guidage (120) comprend une portion annulaire (121) et une portion de tige (122) ;
la bielle à double articulation (110) comprend une première bague de liaison (111), un premier panneau de pressage (112), une deuxième bague de liaison (113), un deuxième panneau de pressage (114) et une plaque de liaison (115) ;
la première bague de liaison (111) et la deuxième bague de liaison (113) sont prévues à deux extrémités dans une direction longitudinale de la plaque de liaison (115), et la première bague de liaison (111) et la deuxième bague de liaison (113) sont axialement parallèles ;
le premier panneau de pressage (112) est prévu sur un côté de la plaque de liaison (115) dans la direction de l'épaisseur et une portion d'extrémité du premier panneau de pressage (112) est reliée à la première bague de liaison (111), une première articulation de verrouillage (c) communiquant avec un premier trou annulaire (a) de la première bague de liaison (111) est formée entre le premier panneau de pressage (112) et la plaque de liaison (115) ; le deuxième panneau de pressage (114) est prévu sur un autre côté de la plaque de liaison (115) dans la direction de l'épaisseur, une portion d'extrémité du deuxième panneau de pressage (114) éloignée du premier panneau de pressage (112) est reliée à la deuxième bague de liaison (113), et une deuxième articulation de verrouillage (d) communiquant avec un deuxième trou annulaire (b) de la deuxième bague de liaison (113) est prévue entre le deuxième panneau de pressage (112) et la plaque de liaison (115) ;
le premier panneau de pressage (112) et le deuxième panneau de pressage (114) sont configurés pour réduire les diamètres du premier trou annulaire (a) et du deuxième trou annulaire (b) à travers des forces de pressage appliquées dans des directions opposées ;
au moins un trou de liaison (g) est prévu sur la portion annulaire (121), une troisième articulation de verrouillage (h) s'étendant dans une direction axiale de la portion de tige (122) est prévue sur la portion de tige (122), et la troisième articulation de verrouillage (h) est communiquée avec l'au moins un trou de liaison (g) ; la portion de tige (122) est insérée dans la deuxième bague de liaison (113) ; la portion de tige (122) est configurée pour réduire la taille de la troisième articulation de verrouillage (h) lorsqu'elle est pressée et réduit ainsi le diamètre de l'au moins un trou de liaison (g) de la portion annulaire (121).

2. Ensemble de bielle selon la revendication 1, dans lequel,
une largeur de la première articulation de verrouillage (c) augmente progressivement le long d'une direction éloignée de la première bague de liaison (111) ; et
une largeur de la deuxième articulation de verrouillage (d) augmente progressivement le long d'une direction éloignée de la deuxième bague de liaison (113).

3. Ensemble de bielle selon la revendication 2, dans lequel,
une première articulation annulaire (e) est prévue de manière circonférentielle autour de la première bague de liaison (111), la première articulation annulaire (e) sépare la première bague de liaison (111) en deux corps annulaires dans une direction de largeur ; et
une deuxième articulation annulaire (f) est prévue de manière circonférentielle autour de la deuxième bague de liaison (113), et la deuxième articulation annulaire (f) divise la deuxième bague de liaison (113) en deux corps d'anneau dans une direction de largeur.

4. Ensemble de bielle selon la revendication 3, dans lequel,
l'ensemble de bielle comprend en outre une poignée (130) et des vis de liaison (140) ;
les vis de liaison (140) passent successivement par le deuxième panneau de pressage (114), la plaque de liaison (115) et le premier panneau de pressage (112), et l'axe des vis de liaison (140) est perpendiculaire à un axe de la première bague de liaison (111) dans un plan horizontal ;
une extrémité de la poignée (130) est reliée par articulation à extrémités des vis de liaison (140), une structure à came est prévue à une extrémité dans laquelle la poignée (130) est reliée par articulation aux vis de liaison (140) et la structure à came est aboutée contre le deuxième panneau de pressage (112).

5. Ensemble de bielle selon la revendication 4, dans lequel,
l'ensemble de bielle comprend une goupille de limitation (150), la goupille de limitation (150) est insérée dans la poignée (130) ; et dans lequel,
la goupille de limitation (150) est reliée de manière glissante à la poignée (130) et est configurée pour être insérée à la fois dans la poignée (130) et dans les vis de liaison (140) pour empêcher la poignée (130) de tourner.

6. Ensemble de fixation à bielle à double articulation, comprenant les ensembles de bielle (100) selon l'une quelconque des revendications 1 à 5, et comprenant en outre une colonne de direction (200) ; dans lequel la colonne de direction (200) est prévue entre deux ensembles de bielle (100), et deux extrémités de la colonne de direction (200) sont reliées aux deux ensembles de bielle (100) respectivement ;
des arbres de liaison (210) sont prévus à deux extrémités de la colonne de direction (200), et les axes des deux arbres de liaison (210) sont perpendiculaires l'un à l'autre ; et
les deux arbres de liaison (210) sont insérés dans les trous de liaison (g) dans les deux ensembles de bielle (100).

7. Ensemble de fixation à bielle à double articulation selon la revendication 6, dans lequel,
au moins une rainure annulaire (m) est prévue sur les arbres de liaison (210), des trous filetés sont ouverts sur les surfaces latérales des trous de liaison (g) ;
et les vis de fixation sont insérées dans les trous filetés et insérées dans l'au moins une rainure annulaire (m).

8. Ensemble de fixation à bielle à double articulation selon la revendication 7, dans lequel l'ensemble de fixation à bielle à double articulation comprend en outre un arbre d'engrenage (300) ;
un côté de l'arbre d'engrenage (300) est inséré dans la première bague de liaison (111) de l'un des ensembles de bielle (100) ; et
une surface d'un autre côté de l'arbre d'engrenage (300) est configurée pour être en forme de dent et pour être reliée à un chevalet en forme U.

9. Chevalet chirurgical, comprenant l'ensemble de fixation à bielle à double articulation selon l'une quelconque des revendications 6 à 8 ; dans lequel
une extrémité de l'ensemble de fixation à bielle à double articulation est reliée au chevalet en forme U et l'autre extrémité de celui-ci est reliée à une table opérationnelle.
